# EUROPÄISCHE PATENTANMELDUNG

(11) **EP 0 780 284 A1**
(43) Veröffentlichungstag der Anmeldung: **25.06.1997**
(21) Anmeldenummer: 96117047.9
(22) Anmeldetag: 24.10.1996
(51) Int. Cl.: B62D 27/02, B62D 25/04

(54) **Starre Verbindung von Bauteilen bei einem Kraftfahrzeug und ein Werkzeug zur Herstellung der Verbindung**

(30) Priorität: 22.12.1995 DE 19548341
(71) Anmelder: MERCEDES-BENZ AG, 70327 Stuttgart (DE)
(72) Erfinder: Thoms, Volker, Dr., 75365 Calw (DE)

(57) **Zusammenfassung**

Die Erfindung betrifft eine starre Verbindung von Bauteilen bei einem Kraftfahrzeug und ein Werkzeug zu der Herstellung der Verbindung. Um die als Karosserieteile ausgestalteten Bauteile auch nach einer Beschichtung während des Zusammenbaus in einfacher Weise gefügt und wirkungsvoll aneinander festzulegen ohne das jeweils außen liegende Bauteil (12) plastisch zu deformieren und die Beschichtung dabei zu beschädigen und somit die Sichtseite der Bauteile optisch zu beeinträchtigen, wird vorgeschlagen, daß bei Ausbildung zweier zu verbindender Bauteile als längliche Hohlkörper das zweite Bauteil (12) über die Länge der Verbindung hinweg axial beabstandet radiale Querschnittsverengungen aufweist, in denen das erste Bauteil (9) an ihm unter Bildung einer lösbaren Steckverbindung gehalten ist, und daß das erste Bauteil (9) - ausgehend von der Stecklage - durch Aufweitung zwischen den Steckverbindungsstellen aufgrund einer Innenhochdruckumformung mit dem Bauteil formschlüssig verklemmt ist, wobei das erste Bauteil im Gegensatz zum zweiten Bauteil unter Hochdruck leichter deformierbar ausgebildet ist. Das zur Umformung verwandte Werkzeug ist als länglicher, radial aufweitbarer, elastischer hohler Blähkörper (27) ausgebildet, der allseits druckdicht verschlossen ist, einen nach außen geführten mit einer Fluidhochdruckleitung verbundenen Druckanschluß besitzt und mit einem axiale Dehnungen des Blähkörpers behindernden Zugmittel versehen ist. Das Werkzeug wird in einem unter einem Fluiddruck stehenden flexiblen Zustand in das erste innere Bauteil in dessen Stecklage eingeführt und weitet unter höherem Druck das innere Bauteil plastisch auf, bis sich ein verklemmender Formschluß der beiden Bauteile ergibt.

## Beschreibung

Die Erfindung betrifft eine starre Verbindung von Bauteilen gemäß dem Oberbegriff von Anspruch 1 und ein Werkzeug zur Herstellung der Verbindung gemäß dem Oberbegriff des Patentanspruches 7.

Eine gattungsgemäße Verbindung bzw. ein gattungsgemäßes Werkzeug ist aus der DE 39 27 896 A1 bekannt. Dort ist eine Verbindung bzw. ein Werkzeug zum lagegenauen Befestigen von Nocken auf einer Hohlwelle beschrieben, wobei in Bearbeitungslage die Nocken und die durch deren Einfädelöffnung hindurchgeführte Hohlwelle in einer entsprechenden formnegativen Gravur eines in zwei Hälften bzw. vier Viertel geteilten Umformwerkzeuges eingelegt sind. In die Hohlwelle wird ein länglicher, elastisch verformbarer, einseitig offener Behälter, in den eine Druckflüssigkeit eingefüllt ist, unter Druck stehend eingeführt. Der Behälter ist im Bereich des einen Endes der Hohlwelle an einem Auflager des Werkzeuges abgestützt und am anderen Ende an einem Mundstück einer Hydraulikanlage flüssigkeits- und druckdicht befestigt. Das Mundstück liegt am Umformwerkzeug an und stützt dabei die Hohlwelle an diesem Ende ab. Das als Druckeinleitungskörper ausgebildete Mundstück weist einen Druckübersetzerkolben auf, mit dem die Hydraulikanlage über einen im Mundstück vorgesehenen und in den Behälter mündenden Druckkanal auf die Druckflüssigkeit einen Hochdruck ausübt, wodurch der elastisch verformbare Behälter sich ausdehnt und sich an die Innenseite der Hohlwelle anlegt. Durch weitere Druckerhöhung wird der hydraulische Druck über den Behälter an die Hohlwelle weitergegeben, welche dadurch radial über ihre gesamte Länge hinweg aufgeweitet wird, so daß die Nocken aufgrund der Umfangsvergrößerung einen Preßsitz auf der Hohlwelle erhalten. Für die Herstellung der Verbindung bei schon beschichteten Karosserieteilen während der Montage ist das dafür ausgelegte Werkzeug aufgrund des aufwendigen Einlegens des der Bauteile in das Werkzeug, der mehrteiligen Ausführung des Werkzeuges, die eine Vielzahl von Bedienungsschritten benötigt, und des sehr großen Platzbedarfes des Werkzeuges allerdings völlig ungeeignet. Für die Herstellung der Verbindung ist aufgrund der hohen Ansprüche an die Gleichmäßigkeit der Aufweitung der Hohlwelle - also des innenliegenden Bauteils -, deren Oberflächengüte hinsichtlich eines genügenden Rundlaufes sehr hoch sein muß, mit dem bekannten Werkzeug auch eine völlige Umschließung der zu verbindenden Bauteile erforderlich, was bei Karosserieteilen mit vertretbarem Aufwand nicht möglich ist.

Des weiteren ist aus der DE 30 08 840 C2 bekannt, eine Rohrrahmenkonstruktion eines Kraftfahrzeuges durch Punktschweißen, Nahtschweißen, Falten oder Verleimen von Metallhalbschalen zu fertigen.

Im Karosseriebau werden im allgemeinen die Blechteile an ihren Fügestellen im Rohbau durch Widerstandsschweißen miteinander verbunden, wie aus der DE 33 06 397 beispielsweise zu entnehmen ist. Alternativ dazu werden mechanische Verbindungen wie beispielsweise Durchsetzfügen eingesetzt, was stellvertretend die DE 37 01 895 zeigt. Hierbei werden zur Vermeidung von Korrosion im Kundenbetrieb die Karosserieteile nach Herstellen der Verbindung einer Antikorrosionsbeschichtung unterzogen. Um jedoch in der Montage einbaufertige Karosserieteile zu fügen und damit eine kundennahe, den individuellen Wunsch berücksichtigende Variantenbildung in der Endmontage zu erreichen, können Fügeverfahren wie Schweißen und Durchsetzfügen nicht eingesetzt werden, da die Beschichtung dabei an den Fügestellen zerstört und die Sichtseite der Karosserieteile infolge von Eindrückungen, Materialverzüge und Verfärbungen optisch beeinträchtigt werden würde.

Der Erfindung liegt die Aufgabe zugrunde, eine gattungsgemäße Verbindung und ein gattungsgemäßes Werkzeug zur Herstellung der Verbindung dahingehend weiterzubilden, daß die Bauteile als Karosserieteile auch nach einer Beschichtung während des Zusammenbaus in einfacher Weise gefügt und wirkungsvoll aneinander festgelegt werden können ohne das äußere Bauteil plastisch zu deformieren und die Beschichtung dabei zu beschädigen und somit die Sichtseite der Bauteile optisch zu beeinträchtigen.

Die Aufgabe ist erfindungsgemäß durch die im Patentanspruch 1 angegebenen kennzeichnenden Merkmale bezüglich der Verbindung und durch die im Patentanspruch 7 angegebenen kennzeichnenden Merkmale bezüglich des Werkzeuges gelöst.

Dank der Erfindung wird ermöglicht, während der Montage von Bauteilen aufgrund der Ausbildung des äußeren zweiten Bauteils mit Querschnittsverengungen durch einfaches Ineinanderstecken der Bauteile eine vorerst lösbare Verbindung zwischen diesen zu erhalten, bei der eine vorgegebene Lage der Bauteile zueinander gesichert ist. Das innere erste Bauteil stützt sich an den Querschnittsverengungen ab, während es im Verlauf zwischen diesen mit dem umgebenden äußeren Bauteil einen Aufweitraum ausbildet, in den es sich bei Einleitung eines Hochdruckes über ein Fluid plastisch hineinverformen kann. Über den dabei erreichten Formschluß zwischen den Bauteilen wird die vorher lösbare Steckverbindung unlösbar starr. Dadurch, daß das Fluid in einem flexiblen, in das innere Bauteil eingeführten Hohlkörper gehalten wird, wird eine trockene Umformung des inneren Bauteiles erreicht. Durch die unterschiedlichen Verformbarkeiten der Bauteile, die in unterschiedlichen Werkstoffen und/oder unterschiedlichen Wandstärken der Bauteile begründet sind, kann das innere Bauteil, das hinsichtlich der wesentlich geringeren Fließspannung leichter als das äußere Bauteil zu deformieren ist, sich unter dem Fluidhochdruck plastisch verformen, wogegen das äußere Bauteil unverformt bleibt oder sich höchstens elastisch deformiert. Somit konzentriert sich die Verformung allein auf das innere Bauteil, so daß das äußere Bauteil, insbesondere dessen Sichtseite von einer Verformung verschont bleibt und daher keine unschönen Buckel aufweist. Gleichfalls werden dabei Abplatzungen von der Beschichtung, beispielsweise der Lackierung und/oder des Korrosionsschutzes, vermieden. Das zur Festlegung der beiden Bauteile aneinander verwandte Werkzeug, das quasi als biegeelastischer radial flexibler Hohlstab ausgebildet ist, kann unter einem innen ausgeübten Fluiddruck, der über Atmosphärendruck beträgt, in jegliche Biegeformen von Bauteilen eingeführt werden, wobei er sich dem Verlauf des Bauteils durch seine fluidisch erzeugte Biegeelastizität anpaßt. Hierbei kann das eingeführte Werkzeug variabel mehr oder weniger weit in das Bauteil eingeschoben werden, je nach dem an welcher Stelle sich ein Aufweitraum des äußeren Bauteils befindet. Um bei Anlegen eines Fluiddruck eine axiale Verlängerung des Werkzeuges im wesentlichen zu verhindern, die einerseits eine Störung der radialen Aufweitung des inneren Bauteils zur Folge hat und andererseits eine erhebliche Reißgefahr der Haut des stabähnlichen Blähkörpers mit sich bringt, sind Zugmittel vorgesehen, die in axialer Richtung entgegenwirken. Der Blähkörper ist allseits druckdicht verschlossen und verschließt an seinen Enden das innere Bauteil vollständig, so daß sich bei Anlegen eines Fluidhochdruckes keine sich zwischen das innere und das äußere Bauteil drängende Blase des elastischen Blähkörpers ergibt, die gegebenenfalls platzen kann, worauf sich ein rapider Druckabfall in der Hochdruckflüssigkeit einstellt. Die Umformung erfolgt mit sehr geringem apparativen Aufwand, da eine äußere Abstützung für das außen liegende Bauteil sowie die vom Innenhochdruckumformen gewohnten Pressentisch und Pressenstößel aufgrund der speziellen Ausbildung und den Materialeigenschaften des äußeren Bauteils einerseits und der weitgehend freien Verformbarkeit des inneren Bauteils, d.h. des Fehlens von erhöhten Ansprüchen an die Oberflächengüte und den Formverlauf des inneren Bauteils andererseits gänzlich entfallen. Gleichzeitig ist das hier angewandte Werkzeug zum Innenhochdruckumformen nicht stationär festgelegt, sondern manuell oder gegebenenfalls mittels eines Montageroboters örtlich unabhängig handhabbar. Durch die mit der erfindungsgemäßen Verbindung erworbene Möglichkeit, kurz vor der Fertigstellung des Fahrzeuges mit fertigbearbeiteten und beschichteten Bauteilen noch Änderungen für die Karosserie des Kraftfahrzeuges einzubringen, können kurzfristig und schnell ohne Qualitätsminderungen kundenwunschgerecht die verschiedensten Modelivarianten gebaut werden.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
Fig. 1 in einem seitlichen Längsschnitt abschnittsweise eine Anschlußverbindung zwischen zwei Karosserieteilen mit der erfindungsgemäßen Verbindung in Stecklage und ohne Aufweitung des inneren Bauteils,
Fig. 2 die Anschlußverbindung aus Fig. 1 mit innenhochdruckaufgeweitetem inneren Bauteil und dem zur Herstellung der Verbindung verwandten erfindungsgemäßen Umformwerkzeug im seitlichen Längsschnitt.

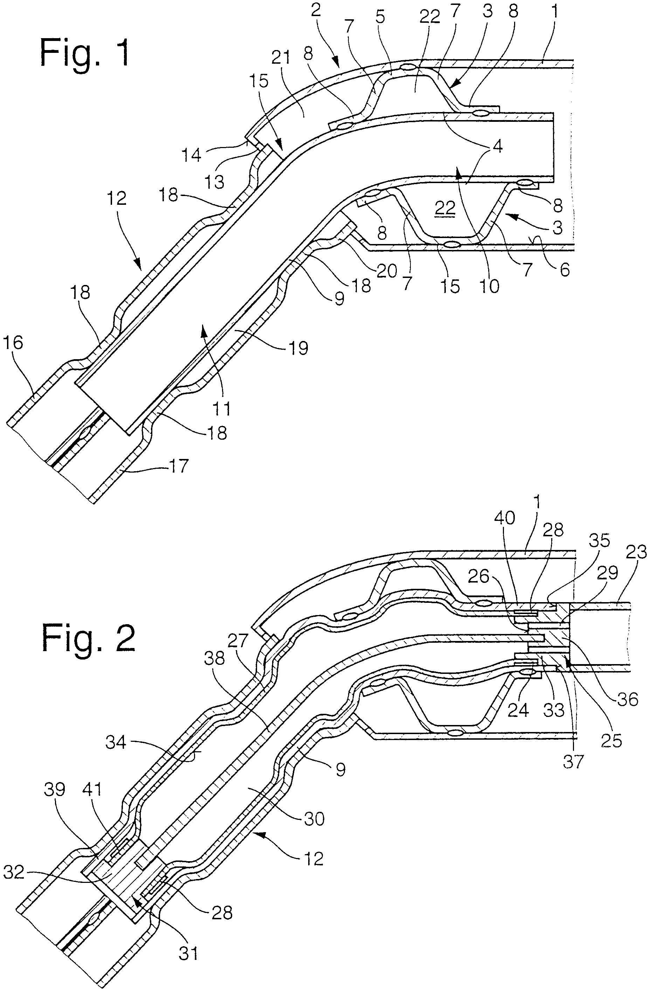

In Fig. 1 ist ein Abschnitt eines Daches 1 eines Kraftfahrzeuges dargestellt, das eines der zu fügenden Karosserieteile bildet und das zumindest in seinem vorderen Endbereich 2 hohl ausgebildet ist und dort innenseitig zwei gegenüberliegende, sich quer zum Dach 1 hin erstreckende U-förmige Versteifungsprofile 3 aufweist. Diese sind mit ihrer Öffnung 4 zueinander ausgerichtet angeordnet und sind am Grund 5 mit der Innenseite 6 des korrosionsfest beschichteten Daches 1 oben und unten verschweißt. Alternativ ist hierbei auch eine Klebeverbindung denkbar.

Die Versteifungsprofile 3 weisen jeweils an ihren Schenkeln 7 Flanschleisten 8 auf, zwischen die ein rohrförmiges erstes Bauteil 9 gesteckt ist, das an seinen Kontaktstellen mit den Leisten 8 an diese angeschweißt ist. Hierbei ist anstatt einer Schweißverbindung ebenfalls eine Klebeverbindung möglich. Für das Bauteil 9 bedeutet die Verschweißung mit den Versteifungsprofilen 3 und damit die starre Verbindung mit dem Dach 1 für die spätere Hochdruckbeaufschlagung und Aufweitung des Bauteils 9 ein Zuganker in axialer Richtung, der ein axiales Zusammenziehen des Bauteils 9 bei seiner stellenweisen radialen Aufweitung weitgehend verhindert. Das rohrförmige Bauteil 9 ist gebogen ausgebildet, wobei es sich aus einem horizontal liegenden linearen Abschnitt 10 und einem nach unten und vorne hin in stumpfen Winkel abbiegenden Abschnitt 11 zusammensetzt.

Auf den Abschnitt 11 ist ein zweites hohles längliches Bauteil 12, das die A-Säule der Karosserie darstellt und korrosionsfest beschichtet ist, so weit aufgesteckt, daß es in eine Öffnung 13 an der vorderen Stirnseite 14 des Daches 1 etwas hineinragt. Das zweite Bauteil 12 besitzt im Anschlußbereich 15 an das Dach 1 ober- und unterseitig zwei axial beabstandete Querschnittsverengungen, die als Einschnürungen 18 des linearen Verlaufes des Bauteils 12 gestaltet sind und über die das zweite Bauteil 12 innenseitig am ersten Bauteil 9 reibschlüssig in der lösbaren Steckverbindung gehalten ist. Durch die reibschlüssige Steckverbindung ist eine sichere Montage der Bauteile 9,12 am Dach 1 gewährleistet, wobei ein Verrutschen der maßhaltig aufeinander in der relativen Lage zueinander abgestimmten Bauteile 9,12 verhindert wird.

Aufgrund der indirekten Verbindung zwischen Dach 1 und dem die A-Säule bildende Bauteil 12, bei der das Bauteil 9 nicht unmittelbar am Dach 1 sondern an den Versteifungsprofilen 3 befestigt ist, wird eine Übertragung von Körperschall von einem Karosserieteil auf das andere verhindert, so daß die Verbindung sich auf die Gesamtkarosseriekonstruktion geräuschlich vorteilhaft auswirkt. Desweiteren können dabei auch unterschiedliche Materialien bei den gefügten Karosserieteilen zum Einsatz gelangen, die bisher aufgrund von sonst auftretender Kontaktkorrosion außer Acht gelassen wurden. Dieser Einsatz kann sich begünstigend auf eine Leichtbauweise der Karosserie auswirken. Es ist natürlich auch denkbar, das Bauteil 9 direkt am Dach 1 anzubringen, jedoch müßte dann die physikalische und chemische Kompatibilität der Werkstoffe beider Teile gesichert sein. Weiterhin sind durch die indirekte Verbindung der Karosserieteile Fertigungstoleranzen ausgleichbar ohne die angeschlossenen Karosserieteile zu verformen, so daß die Einhaltung eines Maßkonzeptes für das Kraftfahrzeug erleichtert wird.

Das Bauteil 12 ist aus zwei Halbschalen 16,17 gefertigt, wobei dies als vorgefertigte zusammengeschweißte Baueinheit auf das Bauteil 9 aufgeschoben werden kann. Die Halbschalen 16,17 können auch gesondert an das Bauteil 9 angelegt werden und erst dannach zusammengeschweißt werden. Dies vermeidet ein umständliches Aufschieben des Bauteils 12 auf das Bauteil 9, insbesondere dann, wenn deren Endenquerschnitte nahezu gleichgroß sind.

Das Bauteil 9 weist eine wesentlich niedrigere Fließspannung auf als das umgebende Bauteil 12 auf und ist somit erheblich leichter zu deformieren. Gegebenenfalls kann auuch die Wandstärke des Bauteils 9 geringer sein als die des Bauteils 12. Der Werkstoff des Bauteils 9 kann zusätzlich weicher sein als der des Bauteils 12, so daß dadurch die Verformbarkeit des Bauteils 9 bezüglich des Bauteils 12 vergrößert wird. Gleiches gilt dabei auch im Vergleich des Bauteils 9 mit den Versteifungsprofilen 3. Dadurch wird verhindert, daß bei einer späteren Aufweitung des Bauteils 9 auch das Bauteil 12 plastisch deformiert wird. Durch die Verwendung von Halbschalen 16,17 beim Bauteil 12 und deren Anlegung an das Bauteil 9 und der darauffolgenden Zusammenschweißung der Schalen wird eine unerwünschte Deformation des Bauteils 9, das aus einem gegenüber dem Bauteil 12 sehr stark und leicht verformbaren Werkstoff besteht, verhindert.

Zwischen den beiden als Einschnürungen 18 des Bauteils 12 ausgebildeten Steckverbindungsstellen begrenzt das Bauteil 12 mit dem Bauteil 9 einen Aufweitraum 19. Das Bauteil 9 begrenzt desweiteren mit dem sich an die obere Steckverbindungsstellen zum Dach 1 hin anschließenden, hinsichtlich der Einschnürung 18 radial auskragenden Ende 20 des Bauteils 12 sowie der Innenseite 6 des Daches 1 einen Aufweitraum 21 sowie mit den Versteifungsprofilen 3 zwischen deren voneinander beabstandeten Flanschleisten 8 einen Aufweitraum 22. Die beiden zu verbindenden Karosserieteile, das Dach 1 und das äußere zweite Bauteil 12, können vor Erzielung der starren Verbindung im übrigen schon lackiert sein. Anstelle oder gleichzeitig mit den oben und unten am Bauteil 12 angeordneten Querschnittsverengungen 18 können auch an diesem Querschnittsverengungen - gegebenenfalls auch in Form von Einschnürungen - seitlich vorgesehen sein.

Fig. 2 zeigt die gefügten Karosserieteile 1 und 12 in starrer Verbindung miteinander. Zur Herstellung der starren Verbindung wird durch eine zwar im vorderen Endbereich 2 des Daches angeordneten jedoch bezüglich der Versteifungsprofile 3 weiter hinten gelegene Durchgriffsöffnung ein Werkzeug hindurchgeschoben. Das Werkzeug, das mit der Innenhochdruckumformtechnik arbeitet, beinhaltet eine Fluidhochdruckleitung 23, die mit einer Hydraulik und einer entsprechend geeigneten Bedieneinheit verbunden ist. Desweiteren ist am Werkzeug ein Handgriff zur verbesserten Handhabung vorgesehen.

Einenends der Leitung 23 ist ein Stopfen 25 befestigt, an dem auf leitungsabgewandter Seite 26 mit einem Ende 24 ein als Elastomerschlauchstück ausgebildeter Blähkörper 27 mittels beispielsweise eines spannbaren Metallbandes 28 befestigt ist, wobei der Stopfen 25 den Blähkörper 27 druckdicht verschließt. Das Schlauchstück besitzt eine Wandstärke von etwa 1-3 mm. Der Blähkörper 27 kann auch alternativ als biegeschlaffe, gummiartig flexible Hauthülle ausgebildet sein.

Der Stopfen 25 besitzt eine Längsbohrung 29, die aus dem Innenraum 30 des Blähkörpers 27 in die Fluidleitung 23 nach außen führt und somit den Druckanschluß bildet. Am anderen Ende 41 ist der Blähkörper 27 mit einem weiteren Stopfen 31 druckdicht verschlossen und an diesem ebenfalls mit einem Metallband 28 befestigt. Beide Stopfen 25 und 31 sind pilzförmig ausgebildet, wobei der Stopfen 31 mit seinem Kopf 32 den Querschnitt des rohrförmigen Bauteils 9 im Bereich der Steckverbindungsstelle jedoch außerhalb des zu verformenden Bereiches des Bauteils 9 ausfüllt, so daß der Blähkörper 27 nicht aus dem dachabgewandten Ende 39 des Bauteils 9 als Blase austreten kann. Weist der Schlauch eine hohe Wandstärke (3mm) auf, ist es nicht erforderlich, daß der Stopfen 31 den Querschnitt des Bauteils 9 ganz ausfüllt, da der Schlauch aufgrund seiner Dicke nicht durch den Spalt zwischen Bauteil 9 und Stopfen 31 quellen kann.

Der Blähkörper 27 wird nun über die Fluidleitung 23 und die Längsbohrung 29 im Innenraum 30 mit einem Fluiddruck beaufschlagt, der den Blähkörper 27 in einen biegeelastischen Zustand versetzt, so daß er beim Einführen in das Bauteil 9 dessen Biegeverlauf folgen kann. Hat das Werkzeug seine vorgegebene Lage erreicht, liegt der Stopfen 25 mit seinem Schaft 33 in Kopfnähe stramm an der Innenseite 34 des Bauteils 9 und mit der Unterseite 35 seines Kopfes 36 an dessen Stirnseite 37 dicht an. Hierdurch ist ein etwaiger Austritt des Blähkörpers 27 aus dem Bauteil 9 auch am dachzugewandten Ende 40 ausgeschlossen.

Um eine axiale Längung des Blähkörpers 27 bei Aufweitvorgang zu vermeiden, ist für diesen als der Längung entgegenwirkendes Zugmittel eine Stahlseele 38 vorgesehen, die innerhalb des Innenraumes 30 des Blähkörpers verläuft und beide Stopfen 25 und 31, an denen sie befestigt ist, verbindet.

Sodann wird der Fluiddruck erhöht, wobei sich der Blähkörper 27 radial aufweitet und sich stramm an die Innenseite 34 des Bauteils 9 anlegt. Bei weiterer Erhöhung des Druckes wird das Material des Bauteils 9 zwischen den Steckverbindungsstellen, zwischen den Schweißverbindungstellen der Versteifungsprofile 3, und zwischen der oberen Steckverbindungsstelle und der dieser benachbarten Schweißverbindungsstelle aufgrund des druckweitervermittelnden Blähkörpers 27 in die Aufweiträume 19,21 und 22 gepreßt, bis sich ein Formschluß des Bauteils 9 mit dem Bauteil 12 und den Versteifungsprofilen 3 ergibt, der eine Verklemmung der Teile bewirkt. Da die Druckführung in einem geschlossenen Werkzeugsystem verläuft wirkt das Werkzeug völlig rückstoßfrei, so daß auch bei hohen Drücken eine einfache manuelle Handhabbarkeit gewährleistet ist. Die Druckeinleitung kann in überlagerten Druckstößen von einer Dauer erfolgen, die im Millisekunden-Bereich liegt.

Hierbei kann sich der Wandungsverlauf des Bauteils 9 an die Innenkontur des Bauteils 12 - wie gezeigt - anpassen bzw. die Wandung des Bauteils 9 an die Wandung des Bauteils 12 anlegen. Dadurch wird kein Raum belassen, in dem sich Feuchtigkeit wie beispielsweise Schwitzwasser sammeln kann, das zu einer Korrosion an der unbeschichteten Innenseite des Bauteils 12 und des Bauteils 9 im Lauf der Zeit führen kann. Weiterhin können sich keine Luftschallwellen ausbilden, die geräuschlich für die Karosserie nachteilig wären.

Nach erfolgter Herstellung der starren Verbindung wird der Fluiddruck vermindert, bis der unter Hochdruck extrem harte Blähkörper 27 ausreichend biegeelastisch ist, und wird aus dem Bauteil 9 herausgezogen. Somit sind hohle Karosserieteile aller denkbaren geometrischen Formen mittels der erfindungsgemäßen Verbindungstechnik in einfacher Weise verbindbar. Die Stoffdicken der Bauteile 9,12, die Abmessungen der Aufweiträume 19,21,22, die Konsistenz der Materialien der zu fügenden Bauteile 9,12 und die Druckhöhe sind empirisch aufeinander abzustimmen, so daß das äußere Bauteil 12 unverformt bleibt.

## Patentansprüche

1. Starre Verbindung von Bauteilen bei einem Kraftfahrzeug, wobei ein erstes Bauteil als länglicher Hohlkörper ausgebildet ist und ein zweites Bauteil dieses umfänglich umschließt, wobei der in Umfangsrichtung umlaufend geschlossene Hohlkörper mittels eines in diesen eingeführten, mit der Innenhochdruckumformtechnik arbeitenden Werkzeuges derart plastisch aufgeweitet ist, daß der Hohlkörper am zweiten Bauteil fixiert ist,
**dadurch gekennzeichnet,**
daß das zweite äußere Bauteil (12) länglich und hohl ist und über die Länge der Verbindung hinweg axial beabstandet radiale Querschnittsverengungen (18) aufweist, in denen das erste Bauteil (9) an ihm unter Bildung einer lösbaren Steckverbindung gehalten ist, und daß das erste Bauteil (9) - ausgehend von der Stecklage - durch Aufweitung zwischen den Steckverbindungsstellen aufgrund der Innenhochdruckumformung mit dem zweiten Bauteil (12) formschlüssig verklemmt ist, wobei das erste Bauteil (9) derart ausgebildet ist, daß es im Vergleich zum zweiten Bauteil (12) gegenüber einer Innenhochdruckbeaufschlagung eine höhere Deformierbarkeit aufweist, insoweit, als daß das erste Bauteil (9) sich plastisch verformt, während das zweite Bauteil (12) frei von einer äußeren Abstützung von einer Verformung unberührt bleibt oder sich höchstens an den Querschnittsverengungen (18) elastisch verformt.

2. Verbindung nach Anspruch 1,
**dadurch gekennzeichnet,**
daß das erste Bauteil (9) durch die Aufweitung an die Innenkontur des zweiten Bauteils (12) vollständig angepaßt ist.

3. Verbindung nach Anspruch 1,
**dadurch gekennzeichnet,**
daß die Querschnittsverengungen (18) des zweiten Bauteils (12) derart ausgebildet sind, daß es am ersten Bauteil (9) in der Steckverbindung reibschlüssig gehalten ist,

4. Verbindung nach Anspruch 1,
**dadurch gekennzeichnet,**
daß die hohlen Bauteile (9,12) rohrförmig ausgebildet sind,

5. Verbindung nach Anspruch 1,
**dadurch gekennzeichnet,**
daß die Verbindung eine Anschlußverbindung für zwei voneinander getrennte, hohle beschichtete Karosserieteile (1,12) ist, wobei das erste Bauteil (9) der Verbindung als Verbindungsstück an einem Ende (40) mit einem der Karosserieteile (1) durch eine herkömmliche Verbindungstechnik, vorzugsweise durch Schweißen oder Kleben fest verbunden ist und mit dem anderen Ende (39) in das zweite Bauteil (12) gesteckt ist, das das andere Karosserieteil bildet.

6. Verbindung nach Anspruch 5,
**dadurch gekennzeichnet,**
daß das erste Bauteil (9) durch eine Öffnung (13) des Karosserieteils (1), an dem es in herkömmlicher Weise befestigt ist, hindurch zwischen zwei im Karosserieteil (1) gegenüberliegend angebrachte Versteifungsprofile (3) gesteckt und an diesen fixiert ist.

7. Werkzeug zum Verbinden von Bauteilen mittels der Innenhochdruckumformtechnik, mit einem länglichen, radial aufweitbaren, elastischen hohlen Blähkörper, der an eine Fluidhochdruckleitung angeschlossen ist und in einem unter einem Fluiddruck stehenden flexiblen Zustand in ein erstes hohles Bauteil, das von einem zweiten Bauteil umschlossen ist, einführbar ist,
**dadurch gekennzeichnet,**
daß der Blähkörper (27) allseits druckdicht verschlossen ist, einen nach außen geführten mit der Fluidhochdruckleitung (23) verbundenen Druckanschluß (29) besitzt und mit einem axiale Dehnungen des Blähkörpers (27) behindernden Zugmittel (38) versehen ist.

8. Werkzeug nach Anspruch 7,
**dadurch gekennzeichnet,**
daß der Blähkörper (27) als Schlauchstück ausgebildet ist, das an beiden Enden (24,41) mittels Stopfen (25,31) druckdicht verschlossen ist, wobei einer der Stopfen (25) eine Bohrung (29) aufweist, die den nach außen führenden Druckanschluß bildet.

9. Werkzeug nach Anspruch 8,
**dadurch gekennzeichnet,**
daß das Zugmittel (38) innerhalb des Blähkörperinnenraumes (30) angeordnet und endseitig an den beiden Stopfen (25,31) befestigt ist.

10. Werkzeug nach Anspruch 9,
**dadurch gekennzeichnet,**
daß das Zugmittel hochfest ist und vorzugsweise von einer Stahlseele (38) ist.
